# EUROPEAN PATENT APPLICATION

(11) **EP 4 507 014 A1**
(43) Date of publication of application: **12.02.2025**
(21) Application number: 22939436.6
(22) Date of filing: 06.05.2022
(51) Int. Cl.: H01M 4/02

(54) **NEGATIVE ELECTRODE MATERIAL, NEGATIVE ELECTRODE PLATE AND PREPARATION METHOD THEREFOR, AND LITHIUM ION BATTERY AND PREPARATION METHOD THEREFOR**

(30) Priority: 26.04.2022 CN 202210446202; 26.04.2022 CN 202210446207
(71) Applicant: Songshan Lake Materials Laboratory, Dongguan, Guangdong 523000 (CN); Institute of Physics, Chinese Academy of Sciences, Beijing 100190 (CN)
(72) Inventor: JIN, Zhou, Dongguan, Guangdong 523000 (CN); HUANG, Xuejie, Dongguan, Guangdong 523000 (CN); YAN, Yong, Dongguan, Guangdong 523000 (CN); WANG, Pitao, Dongguan, Guangdong 523000 (CN); HU, Baoping, Dongguan, Guangdong 523000 (CN)
(74) Representative: Meyer, Thorsten
(86) International application number: PCT/CN2022/091231
(87) International publication number: WO 2023/206593

(57) **Abstract**

The present disclosure relates to an anode material, an anode sheet and a lithium-ion battery, and belongs to the technical field of lithium-ion battery materials. The anode material comprises a silicon-based material, a carbon-coated tin nanowire and a carbon nanotube. The carbon-coated tin nanowire and the carbon nanotube both have a certain length, and have flexibility and elasticity to some extent. And they are mixed with the silicon-based material to form a three-dimensional conductive network structure, which can alleviate the volume effect of the anode material during the lithiation / delithiation process. Thus the lithium-ion battery has a large specific capacity and high cycling stability. At the same time, the anode material has a remarkable ionic conductivity and an excellent electronic conductivity, thereby obtaining a better conductivity.

## Description

### CROSS-REFERENCE TO RELATED DISCLOSURES

This disclosure claims priority to the Chinese patent application No. 202210446202.3, entitled "ANODE MATERIALS, ANODE SHEETS AND LITHIUM-ION BATTERIES" and filed with the Chinese Patent Office on April 26, 2022, and the Chinese patent application No. 202210446207.6, entitled "ANODE SHEETS AND BATTERIES" and filed with the Chinese Patent Office on April 26, 2022, the entire contents of which are incorporated herein by reference.

### TECHNICAL FIELD

The present disclosure relates to the technical field of lithium-ion battery materials, and particularly, it relates to an anode material, an anode sheet and a lithium-ion battery.

### BACKGROUND

Since portable electronic devices and electric vehicles are rapidly developed and widely used, there is an urgent need for lithium-ion batteries with a high specific energy and a long cycle life. Currently, graphite is mainly adopted as an anode material in commercial lithium-ion batteries. However, a theoretical specific capacity of graphite is only 372 mAh/g, which confines a further enhancement of specific energy for the lithium-ion batteries.

Silicon has a theoretical specific capacity of up to 4200 mAh/g. However, the volume expansion in excess of 300% of the silicon during lithium storage process can easily cause the pulverization of silicon particles and the exfoliation of active materials from current collectors, resulting in a significant reduction in the cycling stability of the electrodes.

### SUMMARY OF THE DISCLOSURE

In view of at least one shortcoming of the prior art, an objective of an embodiment of the present disclosure is at least, for example, to provide an anode material, an anode sheet and a lithium-ion battery, so that the lithium-ion battery has a large specific capacity and high cycling stability.

In a first aspect, an embodiment of the present disclosure provides an anode material, comprising a silicon-based material, a carbon-coated tin nanowire and a carbon nanotube.

The carbon-coated tin nanowire and the carbon nanotube both have a certain length, and have flexibility and elasticity to some extent. And they are mixed with the silicon-based material to form a three-dimensional conductive network structure, which can alleviate the volume effect of the anode material during the lithiation / delithiation process. Thus the lithium-ion battery has a large specific capacity and high cycling stability. At the same time, the anode material has a remarkable ionic conductivity and an excellent electronic conductivity, thereby obtaining a better conductivity.

In some embodiments of the present disclosure, the silicon-based material is at least one of monatomic silicon, a silicon alloy, and silicon monoxide.

In some embodiments of the present disclosure, the monatomic silicon is at least one of a silicon nanoparticle, a silicon nanosheet, and a silicon nanowire.

In some embodiments of the present disclosure, the silicon alloy is at least one of a silicon-aluminum alloy, a silicon-magnesium alloy, a silicon-iron alloy and a silicon-silver alloy.

In some embodiments of the present disclosure, a particle size of the silicon nanoparticle is in a range of from 5 nm to 200 nm.

In some embodiments of the present disclosure, a thickness of the silicon nanosheet is in a range of from 5 nm to 100 nm, and a planar size of the silicon nanosheet is in a range of from 100 nm to 2000 nm.

In some embodiments of the present disclosure, a diameter of the silicon nanowire is in a range of from 5 nm to 200 nm, and a length of the silicon nanowire is in a range of from 50 nm to 2000 nm.

In some embodiments of the present disclosure, a surface of the silicon-based material is coated with a carbon layer with a nanometer-scale thickness.

In some embodiments of the present disclosure, the thickness of the carbon layer coated on the silicon-based material is in a range of from 2 nm to 10 nm.

In some embodiments of the present disclosure, a diameter of the carbon-coated tin nanowire is less than 100 nm, and a length-to-diameter ratio of the carbon-coated tin nanowire is in a range of from 5:1 to 1000: 1.

In some embodiments of the present disclosure, a thickness of a carbon coating of the carbon-coated tin nanowire is nanometer-scale.

In some embodiments of the present disclosure, the thickness of the carbon coating of the carbon-coated tin nanowire is in a range of from 2 nm to 10 nm.

In some embodiments of the present disclosure, a graphitization degree, γ, of the carbon coating of the carbon-coated tin nanowire satisfies a relationship of 0.3 ≦ γ ≦ 1, wherein γ = (0.344-d₀₀₂)/(0.344-0.3354), and d₀₀₂ is an interlayer spacing of (002) crystal plane, expressed in nanometers (nm), of the carbon coating.

In some embodiments of the present disclosure, a diameter of the carbon nanotube is less than 20 nm and a length-to-diameter ratio of the carbon nanotube is in a range of from 10:1 to 1000: 1.

In some embodiments of the present disclosure, the carbon nanotube at least comprises a single-walled carbon nanotube.

In some embodiments of the present disclosure, the carbon nanotube is a mixture of a single-walled carbon nanotube and a multi-walled carbon nanotube.

In some embodiments of the present disclosure, a percent of silicon by weight in an anode material is 60%-98%, a percent of tin by weight in the anode material is 0.5%-20%, and a percent of carbon by weight in the anode material is 1.5%-20%.

In some embodiments of the present disclosure, the anode material also comprises a carbon powder.

In some embodiments of the present disclosure, the carbon powder is one or more of graphite, hard carbon and soft carbon.

In a second aspect, an embodiment of the present disclosure provides an anode sheet, comprising the above-mentioned anode material.

In a third aspect, an embodiment of the present disclosure provides a method for preparing an anode sheet, comprising:
mixing the above-mentioned anode material with a solvent, a conductive additive and a binder to form an anode slurry;
applying the anode slurry on an anode collector, and drying to obtain the anode sheet.

In a fourth aspect, an embodiment of the present disclosure provides a lithium-ion secondary battery, comprising the above-mentioned anode sheet.

In a fifth aspect, an embodiment of the present disclosure provides a method for preparing a lithium-ion secondary battery, comprising:
combining the above-mentioned anode sheet with a cathode sheet and a separator to form an electrode assembly;
placing the electrode assembly in a housing, and injecting an electrolyte into the housing to obtain the lithium-ion secondary battery.

In a sixth aspect, an embodiment of the present disclosure provides a solid-state lithium-ion battery, comprising the above-mentioned anode sheet.

In a seventh aspect, an embodiment of the present disclosure provides a method for preparing a solid-state lithium-ion battery, comprising:
combining the above-mentioned anode sheet with a cathode sheet and a solid electrolyte to obtain the solid-state lithium-ion battery.

### BRIEF DESCRIPTION OF THE DRAWINGS

In order to illustrate the technical solutions of the embodiments of the present disclosure more clearly, drawings required in the embodiments are briefly described below. It should be understood that the following drawings only show some certain embodiments of the present disclosure and thus shall not be regarded as a limitation of the scope. For those skilled in the art, other relevant drawings can also be obtained based on these drawings, without any creative work.
Figure 1 is a structural schematic diagram of an anode material provided in an example of the present disclosure;
Figure 2 is a scanning electron microscope (SEM) image of an anode material provided in Example 1 of the present disclosure;
Figure 3 is a transmission electron microscope (TEM) image of the anode material provided in Example 1 of the present disclosure;
Figure 4 is a diagram showing electrochemical cycling of a half-cell prepared by the anode material provided in Example 1 of the present disclosure.

Reference Symbols: 110 silicon-based material; 120 carbon-coated tin nanowire; 130 carbon nanotube.

### DETAILED DESCRIPTION

For clear illustration of the objectives, technical solutions and advantages of the embodiments of the present disclosure, the technical solutions of the present disclosure are described clearly and completely below.

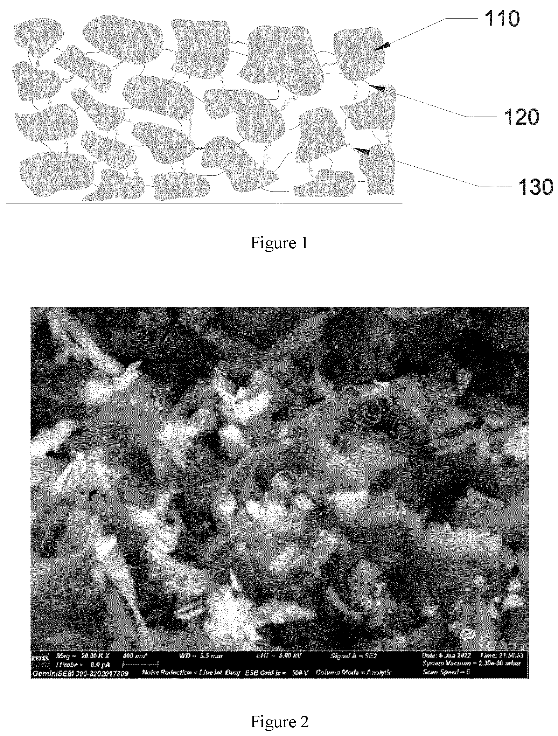

Figure 1 is a structural schematic diagram of the anode material provided in an example of the present disclosure. Referring to Figure 1, the anode material comprises a silicon-based material 110, a carbon-coated tin nanowire 120 and a carbon nanotube 130. After the silicon-based material 110, the carbon-coated tin nanowire 120 and the carbon nanotube 130 are mixed, the anode material has a structure as shown in Figure 1.

Optionally, the carbon-coated nanowire and the carbon nanotube 130 both have a certain length, and have flexibility and elasticity to some extent. After they are mixed with the silicon-based material 110, a three-dimensional conductive network structure may be formed, which can alleviate the volume effect of the anode material during the lithiation / delithiation process. Thus the lithium-ion battery has a large specific capacity and high cycling stability. At the same time, the anode material has a remarkable ionic conductivity and an excellent electronic conductivity, thereby obtaining a better conductivity.

The silicon-based material 110 refers to a silicon-based material 110 containing silicon and capable of lithiation / delithiation. For example, the silicon-based material 110 is at least one of monatomic silicon, a silicon alloy, and silicon monoxide. The silicon alloy is at least one of a silicon-aluminum alloy, a silicon-magnesium alloy, a silicon-iron alloy and a silicon-silver alloy.

A size of the silicon-based material 110 may be nanometer-scale or micrometer-scale. The silicon-based material 110 may be granular, flake-like, wire-like, etc. Taking the monatomic silicon as an example, the monatomic silicon is at least one of a silicon nanoparticle, a silicon nanosheet, and a silicon nanowire.

The silicon nanoparticle refers to granular monatomic silicon with a nanometer-scale particle size. Optionally, the particle size of the silicon nanoparticle is in a range of from 5 nm to 200 nm. The particle size of the silicon nanoparticle refers to a maximum outer diameter of the silicon nanoparticle. For example, the particle size of the silicon nanoparticle is 5 nm, 10 nm, 20 nm, 40 nm, 80 nm, 120 nm, 160 nm or 200 nm.

The silicon nanosheet refers to flake-like monatomic silicon with a nanometer-scale thickness. Optionally, a thickness of the silicon nanosheet is in a range of from 5 nm to 100 nm and a planar size of the silicon nanosheet is in a range of from 100 nm to 2000 nm. The thickness of the silicon nanosheet refers to a maximum distance between two surfaces of the silicon nanosheet; and the planar size of the silicon nanosheet refers to a maximum distance between two points lying on the contour line of the flake-like silicon nanosheet on the horizontal projection plane. For example, the thickness of the silicon nanosheet is 5 nm, 10 nm, 20 nm, 40 nm, 60 nm, 80 nm or 100 nm; and the planar size of the silicon nanosheet is 100 nm, 200 nm, 400 nm, 600 nm, 800 nm, 1000 nm, 1200 nm, 1400 nm, 1600 nm, 1800 nm or 2000 nm.

The silicon nanowire refers to wire-like monatomic silicon with a nanometer-scale diameter. A diameter of the silicon nanowire is in a range of from 5 nm to 200 nm and a length of the silicon nanowire is in a range of from 50 nm to 2000 nm. The diameter of the silicon nanowire is a maximum diameter of the silicon nanowire in different regions of the silicon nanowire. For example, the diameter of the silicon nanowire is 5 nm, 10 nm, 20 nm, 40 nm, 80 nm, 120 nm, 160 nm or 200 nm; and the length of the silicon nanowire is 50 nm, 100 nm, 200 nm, 400 nm, 600 nm, 800 nm, 1000 nm, 1200 nm, 1400 nm, 1600 nm, 1800 nm or 2000 nm.

Optionally, a surface of the silicon-based material 110 is coated with a carbon layer with a nanometer-scale thickness. On the one hand, the carbon layer is thin and can maintain a high specific capacity for the anode material. On the other hand, coating of the carbon layer can make the surface of the silicon-based material 110 coated with a well conductive material; further, the coated silicon-based material 110 can cooperate with the carbon-coated tin nanowire 120 and the carbon nanotube 130 to form an anode material having a more conductive network structure, thereby obtaining a better conductivity for the entire anode material. Thirdly, the carbon layer can prevent the silicon-based material 110 from being in direct contact with the electrolyte to a certain extent, thereby further improving the cycling stability of the anode material. Optionally, the thickness of the carbon layer coated on the silicon-based material 110 is in a range of from 2 nm to 10 nm.

The carbon-coated tin nanowire 120 means that a carbon coating is coated on a surface of the tin nanowire to form a carbon-coated tin nanowire 120, which is still in a linear structure and has a nanometer-scale size. Since tin itself has an excellent electrical conductivity and a superb ionic conductivity, the carbon-coated tin nanowire 120 has a fast charging/discharging capability after the tin is in combination with the coated carbon coating. And the carbon coating is coated on the tin nanowire to keep the structure of the carbon-coated tin nanowire intact during the charging and discharging process and thus achieve a good electrical contact. Optionally, a thickness of the carbon coating of the carbon-coated tin nanowire 120 is nanometer-scale. Optionally, the thickness of the carbon coating of the carbon-coated tin nanowire 120 is in a range of from 2 nm to 10 nm.

Optionally, a diameter of the carbon-coated tin nanowire 120 is less than 100 nm and a length-to-diameter ratio of the carbon-coated tin nanowire 120 is in a range of from 5:1 to 1000:1. The carbon-coated tin nanowire 120 in different regions may have a same diameter, or different diameters. When a diameter of the carbon-coated tin nanowire 120 is less than 100 nm and a length-to-diameter ratio of the carbon-coated tin nanowire 120 in a range of from 5:1 to 1000:1, the carbon-coated tin nanowire 120 may be more flexible, and it can form a better three-dimensional conductive network structure after mixed with other materials. Optionally, the length-to-diameter ratio of the carbon-coated tin nanowire 120 is 5:1, 10:1, 20:1, 40:1, 80:1, 160:1, 320:1, 480:1, 600:1 or 1000:1.

Optionally, a graphitization degree, γ, of the carbon coating of the carbon-coated tin nanowire 120 satisfies a relationship of 0.3 ≦ γ ≦ 1, wherein γ = (0.344-d₀₀₂)/(0.344-0.3354), and d₀₀₂ is an interlayer spacing of (002) crystal plane, expressed in nanometers (nm), of the carbon coating.

Optionally, the graphitization degree γ of the carbon coating of the carbon-coated tin nanowire 120 is in a range of from 0.3 to 1. When the graphitization degree γ of the carbon coating of the carbon-coated tin nanowire 120 is in a range of from 0.3 to 1, the graphitization degree of the carbon coating is relatively high and the anode material may have higher efficiency and better cycling performance.

The carbon nanotube 130 refers to a tubular carbon material with a nanometer-scale outer diameter. A diameter of the carbon nanotube 130 is less than 20 nm and a length-to-diameter ratio of the carbon nanotube 130 is in a range of from 10:1 to 1000):1. The carbon nanotube 130 in different parts may have a same diameter, or different diameters. When a diameter of the carbon nanotube 130 is less than 20 nm and a length-to-diameter ratio of the carbon nanotube 130 is in a range of from 10:1 to 1000:1, the carbon nanotube 130 may be more flexible, and can form a better three-dimensional conductive network structure after mixed with other materials.

Optionally, the carbon nanotube 130 comprises at least a single-walled carbon nanotube 130, which can make the anode material have better performance. Optionally, the carbon nanotube 130 may also be a mixture of a single-walled carbon nanotube 130 and a multi-walled carbon nanotube 130.

In an embodiment of an anode material of the present disclosure, a percent of silicon by weight in the anode material is 60%-98%, a percent of tin by weight in the anode material is 0.5%-20%, and a percent of carbon by weight in the anode material is 1.5-20%, wherein the percentage of silicon, tin or carbon by weight in the anode material refers to a content of a corresponding element in the anode material. For example, the percent of carbon by weight refers to a total percentage of carbon from the carbon-coated tin nanowire 120 and from the carbon nanotube 130 in the anode material by weight; the percentage of silicon by weight refers to a percentage of silicon from the silicon-based material 110 in the anode material by weight; and the percentage of tin by weight refers to a percentage of tin from the carbon-coated tin nanowire 120 in the anode material by weight.

For example, the percentage of silicon by weight is 60%, 65%, 70%, 74%, 78%, 82%, 86%, 90%, 94% or 98%; the percentage of tin by weight is 0.5%, 1%, 2%, 4%, 8%, 12%, 16% or 20%; and the percentage of carbon by weight is 1.5%, 3%, 5%, 8%, 10%, 12%, 14%, 16%, 18% or 20%.

The above-mentioned anode material is a silicon-based anode material, which can also be mixed with a carbon-based anode material for use. Optionally, the anode material also comprises a carbon powder. For example, the carbon powder may be one or more of graphite, hard carbon and soft carbon.

An embodiment of the present disclosure also provides an anode sheet, comprising the above-mentioned anode material. The anode sheet contains all the technical features of the above-mentioned anode material and can achieve the same beneficial technical effects as the above-mentioned anode material. Detailed descriptions can be referred to the descriptions of the anode material in the previous text, so those items won't be covered again in the disclosure.

An embodiment of the present disclosure also provides a method for preparing the above-mentioned anode sheet, wherein the above-mentioned anode material can be mixed with a solvent, a conductive additive and a binder to form an anode slurry, which is further applied on an anode collector; after drying, an anode sheet can be formed.

An embodiment of the present disclosure also provides a lithium-ion secondary battery, comprising the above-mentioned anode sheet. The lithium-ion secondary battery contains all the technical features of the above-mentioned anode sheet and can achieve the same beneficial technical effects as the above-mentioned anode material and the above-mentioned anode sheet. Detailed descriptions can be referred to the descriptions of the anode material in the previous text, so those items won't be covered again in the disclosure.

An embodiment of the present disclosure also provides a method for preparing the above-mentioned lithium-ion secondary battery, wherein the anode sheet is combined with a cathode sheet and a separator to form an electrode assembly, which is further placed in a housing; then an electrolyte is injected into the housing to obtain the lithium-ion secondary battery.

An embodiment of the present disclosure also provides a solid-state lithium-ion battery, comprising the above-mentioned anode sheet. The lithium-ion solid-state battery contains all the technical features of the above-mentioned anode sheet and can achieve the same beneficial technical effects as the above-mentioned anode material and the above-mentioned anode sheet. Detailed descriptions can be referred to the descriptions of the anode material in the previous text, so those items won't be covered again in the disclosure.

An embodiment of the present disclosure also provides a method for preparing the above-mentioned solid-state lithium-ion battery, wherein the anode sheet is combined with a cathode sheet and a solid electrolyte to obtain the solid-state lithium-ion battery.

For better understanding of the objectives, technical solutions and advantages of the embodiments of the present disclosure, the technical solutions of the embodiments of the present disclosure are described clearly and completely below. If some specific conditions are not specified in the embodiment, they are carried out according to conventional conditions or conditions recommended by the manufacturers. Reagents or instruments used, without indicating the manufacturers, are all conventional products that can be purchased commercially.

### Example 1

### (1) Preparation of carbon nanotube solution:

A carbon nanotube was dispersed in a solvent, i.e., ethanol, to obtain a carbon nanotube solution, wherein a mass ratio of the carbon nanotube to ethanol was 1:100.

### (2) Preparation of anode material:

A silicon powder with a particle size ranging from 5µm to 10 µm and polyvinyl pyrrolidone (PVP) were added to the carbon nanotube solution obtained in Step (1), and homogenously dispersed in a homogenizer to obtain a homogenized suspension. The homogenized suspension was sanded in a sand mill. After that, a tin nanowire and PVP were added into the homogenized suspension and homogenously dispersed in a homogenizer. After filtering, washing and drying, a uniformly dispersed composite precursor was obtained. Finally, the composite precursor was placed into a high-temperature sintering furnace and sintered from room temperature to 700°C in a mixed atmosphere of nitrogen and acetylene. After sintering, an anode material was obtained.

### (3) Preparation of anode sheet:

The anode material obtained in Step (2), a conductive agent, i.e., Super P Conductive Carbon Black (SP), and sodium alginate were added into water in a mass ratio of 80:5:15 and continuously stirred to obtain an anode slurry. The anode slurry was applied on a surface of a copper foil with a scraper and then dried to obtain an anode sheet. The anode sheet was cold pressed, and then a small disc with a diameter of 15 mm was prepared from the cold pressed anode sheet by using a punch.

### (4) Preparation of half-cell:

The anode sheet obtained in Step (3) and a lithium foil were combined in pairs and assembled into a half coin cell. The assembly process of the half coin cell is conducted in a glove box filled with argon. A Celgard2300 membrane was used as an isolator, and a solution of 1 mol/L LiPF₆ dissolved in a mixture of ethylene carbonate (EC), dimethyl carbonate (DMC) and fluoroethylene carbonate (FEC) in a volume ratio of 4.8:4.8:0.4 (EC:DMC:FEC) was used as an electrolyte.

It has been determined that the anode material obtained in Step (2) of Example 1 comprises a silicon nanoparticle, a carbon-coated tin nanowire and a carbon nanotube. The silicon nanoparticle is coated with a carbon layer on its surface and a particle size of the silicon nanoparticle is in a range of from 50 nm to 200 nm; a diameter of the carbon-coated tin nanowire is in a range of from 20 nm to 80 nm and a length-to-diameter ratio of the carbon-coated tin nanowire is in a range of from 50:1 to 500:1; a diameter of the carbon nanotube is in a range of from 10 nm to 20 nm and a length-to-diameter ratio of the carbon nanotube is in a range of from 100:1 to 200:1. When measured with percentages by weight, silicon accounts for 82.4 wt% of the anode material; tin accounts for 5.6 wt% of the anode material; carbon accounts for 9.9wt% of the anode material; and other substances account for 2. 1wt% of the anode material.

### Example 2

The difference between Example 2 and Example 1 was that the silicon powder with a particle size ranging from 5 µm to 10 µm was replaced with silicon monoxide with a particle size ranging from 5µm to 10 µm, and other steps were the same as those in Example 1.

It has been determined that the anode material of Example 2 comprises a silicon-based material, a carbon-coated tin nanowire and a carbon nanotube. The silicon-based material contains a silicon monoxide nanosheet and a silicon monoxide nanoparticle, which are both coated with a carbon layer on their surfaces. A thickness of the silicon monoxide nanosheet is in a range of from 20 nm to 800 nm and a planar size of the silicon monoxide nanosheet is in a range of from 200 nm to 500 nm; a particle size of the silicon monoxide nanoparticle is in a range of from 50 nm to 200 nm; a diameter of the carbon-coated tin nanowire is in a range of from 20-80 nm and a length-to-diameter ratio of the carbon-coated tin nanowire is in a range of from 50:1 to 500:1; a diameter of the carbon nanotube is in a range of from 10nm to 20 nm and a length-to-diameter ratio of the carbon nanotube is in a range of from 100:1 to 200:1. When measured with percentages by weight, silicon accounts for 63.5wt% of the anode material; oxygen accounts for 30.5wt% of the anode material; tin accounts for 3.4wt% of the anode material; carbon accounts for 5.2wt% of the anode material; and other substances account for 2.6wt% of the anode material.

### Example 3

The difference between Example 3 and Example 1 was that the silicon powder with a particle size ranging from 5 µm to 10 µm in Example 1 was replaced with a silicon-iron alloy with a particle size ranging from 5 µm to 10 µm, and other steps were the same as those in Example 1.

It has been determined that the anode material of Example 3 comprises a silicon-based material, a carbon-coated tin nanowire and a carbon nanotube. The silicon-based material contains a silicon-iron alloy nanosheet and a silicon-iron alloy nanoparticle, which are both coated with a carbon layer on a part of their surfaces. A thickness of the silicon-iron alloy nanosheet is in a range of from 20 nm to100 nm and a planar size of the silicon-iron alloy nanosheet is in a range of from100 nm to 600 nm; a particle size of the silicon-iron alloy nanoparticle is in a range of from 5 nm to 200 nm; a diameter of the carbon-coated tin nanowire is in a range of from 20-80 nm and a length-to-diameter ratio of the carbon-coated tin nanowire is in a range of from 50:1 to 500:1; a diameter of the carbon nanotube is in a range of from 10 nm to 20 nm and a length-to-diameter ratio of the carbon nanotube is in a range of from 100:1 to 200:1. When measured with percentages by weight, silicon accounts for 76.6 wt% of the anode material; silicon accounts for 12.8wt% of the anode material; tin accounts for 4.3wt% of the anode material; carbon accounts for 5.5wt% of the anode material; and other substances account for 0.8wt% of the anode material.

### Example 4

The difference between Example 4 and Example 1 was that the silicon powder with a particle size ranging from 5 µm to 10 µm was replaced with a solar-grade silicon cutting waste (SCW), and other steps were the same as those in Example 1.

It has been determined that the anode material of Example 4 comprises a silicon nanosheet, a silicon nanoparticle, a carbon-coated tin nanowire and a carbon nanotube, and the silicon nanosheet is coated with a carbon layer on its surface. A thickness of the silicon nanosheet is in a range of from 10 nm to 80 nm and a planar size of the silicon nanosheet is in a range of from 200 nm to 800 nm; a particle size of the silicon nanoparticle is in a range of from 5 nm to 200 nm; a diameter of the carbon-coated tin nanowire is in a range of from 20 nm to 80 nm and a length-to-diameter ratio of the carbon-coated tin nanowire is in a range of from 50:1 to 500:1; a diameter of the carbon nanotube is in a range of from 10 nm to 20 nm and a length-to-diameter ratio of the carbon nanotube is in a range of from 100:1 to 200:1. When measured with percentages by weight, silicon accounts for 85.6 wt% of the anode material; tin accounts for 4.8wt% of the anode material; carbon accounts for 5.9 wt% of the anode material; and other substances account for 3.7 wt% of the anode material.

### Example 5

### (1) Preparation of carbon nanotube solution:

A carbon nanotube was dispersed in a solvent, i.e., ethanol, to obtain a carbon nanotube solution, wherein a mass ratio of the carbon nanotube to ethanol was 1:100.

### (2) Preparation of active material:

A solar-grade silicon cutting waste, stannic oxide, and polyvinyl pyrrolidone (PVP) were added to the carbon nanotube solution and homogenously dispersed in a homogenizer to obtain a homogenized suspension. The homogenized suspension was sanded in a sand mill for 5 hours, and then filtered, washed, and dried to obtain a uniformly dispersed composite precursor. Finally, the composite precursor was placed in a high-temperature sintering furnace and sintered in an atmosphere of nitrogen from room temperature to 700 °C, and acetylene gas was introduced for carbon coating. After sintering, the active material was obtained.

### (3) Preparation of anode sheet:

The active material obtained in Step (2), a conductive agent, i.e., Super P Conductive Carbon Black (SP), and sodium alginate were added into water in a mass ratio of 80:5:15 and continuously stirred to obtain an anode slurry. The anode slurry was applied on a surface of a copper foil with a scraper and then dried to obtain an anode sheet. The anode sheet was cold pressed, and then a small disc with a diameter of 15 mm was prepared from the cold pressed anode sheet by using a punch.

### (4) Preparation of half-cell:

The anode sheet obtained Step (3) and a lithium foil were combined in pairs and assembled into a half coin cell. The assembly process of the half coin cell is conducted in a glove box filled with argon. A Celgard2300 membrane was used as an isolator, and a solution of 1 mol/L LiPF₆ dissolved in a mixture of ethylene carbonate (EC), dimethyl carbonate (DMC) and fluoroethylene carbonate (FEC) in a volume ratio of 4.8:4.8:0.4 (EC:DMC:FEC) was used as an electrolyte.

It has been determined that the anode material of Example 5 comprises a silicon nanosheet, a carbon-coated tin nanowire and a carbon nanotube, and the silicon nanosheet is coated with a carbon layer on its surface. A thickness of the silicon nanosheet is in a range of from 10 nm to 80 nm and a planar size of the silicon nanosheet is in a range of from 200 nm to 800 nm; a diameter of the carbon-coated tin nanowire is in a range of from 20-80 nm and a length-to-diameter ratio of the carbon-coated tin nanowire is in a range of from 50:1 to 500:1; a diameter of the carbon nanotube is in a range of from 10-20 nm and a length-to-diameter ratio of the carbon nanotube is in a range of from 100:1 to 200:1. When measured with percentages by weight, silicon accounts for 85.3 wt% of the active material; tin accounts for 4.2 wt% of the active material; carbon accounts for 8.3 wt% of the active material; and other substances account for 2.2 wt% of the active material.

### Example 6

### (1) Preparation of active material:

A solar-grade silicon cutting waste, stannic oxide, polyvinyl pyrrolidone (PVP), ammonium molybdate and magnesium nitrate were homogenously dispersed in a homogenizer to obtain a homogenized suspension. The homogenized suspension was sanded in a sand mill for 5h, and then filtered, washed and dried to obtain a uniformly dispersed composite precursor. Finally, the composite precursor was placed in a high-temperature sintering furnace and sintered from room temperature to 700°C in an atmosphere of nitrogen, and acetylene gas was introduced simultaneously for carbon coating. After sintering, the active material was obtained.

### (2) Preparation of anode sheet:

The active material obtained in Step (2), a conductive agent, i.e., Super P Conductive Carbon Black (SP), and sodium alginate were added into water in a mass ratio of 80:5:15 and continuously stirred to obtain an anode slurry. The anode slurry was applied on a surface of a copper foil with a scraper and then dried to obtain an anode sheet. The anode sheet was cold pressed, and then a small disc with a diameter of 15 mm was prepared from the cold pressed anode sheet by using a punch.

### (3) Preparation of half-cell:

The anode sheet obtained Step (3) and a lithium foil were combined in pairs and assembled into a half coin cell. The assembly process of the half coin cell is conducted in a glove box filled with argon. A Celgard2300 membrane was used as an isolator, and a solution of 1 mol/L LiPF₆ dissolved in a mixture of ethylene carbonate (EC), dimethyl carbonate (DMC) and fluoroethylene carbonate (FEC) in a volume ratio of 4.8:4.8:0.4 (EC:DMC:FEC) was used as an electrolyte.

It has been determined that the active material of Example 6 comprises a silicon nanosheet, a carbon-coated tin nanowire and a carbon nanotube, and the silicon nanosheet is coated with a carbon layer on its surface. A thickness of the silicon nanosheet is in a range of from 10 nm to 80 nm and a planar size of the silicon nanosheet is in a range of from 200 nm to 800 nm; a diameter of the carbon-coated tin nanowire is in a range of from 20 nm to 80 nm and a length-to-diameter ratio of the carbon-coated tin nanowire is in a range of from 50:1 to 500:1; a diameter of the carbon nanotube is in a range of from 10-20 nm and a length-to-diameter ratio of the carbon nanotube is in a range of from 100:1 to 200:1. When measured with percentages by weight, silicon accounts for 85.5 wt% of the active material; tin accounts for 4.9 wt% of the active material; carbon accounts for 5.5 wt% of the active material; and other substances account for 4.1 wt% of the active material.

### Example 7

### (1) Preparation of carbon nanotube solution:

A carbon nanotube and a carbon-coated tin nanowire were dispersed in a solvent, i.e., ethanol, to obtain a carbon nanotube solution, wherein a mass ratio of the carbon nanotube to ethanol was 1:100.

### (2) Preparation of anode material:

A silicon powder with a particle size ranging from 50 nm to 120 nm and polyvinyl pyrrolidone (PVP) were added into the dispersed carbon nanotube and carbon-coated tin nanowire solution obtained in step (1), and homogenously dispersed in a homogenizer, and then filtered, washed and dried to obtain a uniformly dispersed composite precursor. Finally, the composite precursor was placed in a high-temperature sintering furnace and sintered from room temperature to 700°C in a mixed atmosphere of nitrogen and acetylene. After sintering, the anode material was obtained.

### (3) Preparation of anode sheet:

The anode material obtained in Step (2), a conductive agent, i.e., Super P Conductive Carbon Black (SP), and sodium alginate were added into water in a mass ratio of 80:5:15 and continuously stirred to obtain an anode slurry. The anode slurry was applied on a surface of a copper foil with a scraper and then dried to obtain an anode sheet. The anode sheet was cold pressed, and then a small disc with a diameter of 15 mm was prepared from the cold pressed anode sheet by using a punch.

### (4) Preparation of half-cell:

The anode sheet obtained in Step (3) and a lithium foil were combined in pairs and assembled into a half coin cell. The assembly process of the half coin cell is conducted in a glove box filled with argon. A Celgard2300 membrane was used as an isolator, and a solution of 1 mol/L LiPF₆ dissolved in a mixture of ethylene carbonate (EC), dimethyl carbonate (DMC) and fluoroethylene carbonate (FEC) in a volume ratio of 4.8:4.8:0.4 (EC:DMC:FEC) was used as an electrolyte. It has been determined that the anode material of Example 7 comprises a silicon nanoparticle, a carbon-coated tin nanowire and a carbon nanotube, and the silicon nanoparticle is coated with a carbon layer on its surface. A particle size of the silicon nanoparticle is in a range of from 50 nm to 120 nm, a diameter of the carbon-coated tin nanowire is in a range of from 20 nm to 80 nm and a length-to-diameter ratio of the carbon-coated tin nanowire is in a range of from 50:1 to 500:1; a diameter of the carbon nanotube is in a range of from 10 nm to 20 nm and a length-to-diameter ratio of the carbon nanotube is in a range of from 100:1 to 200:1. When measured with percentages by weight, silicon accounts for 84.3 wt% of the anode material; tin accounts for 4.9wt% of the anode material; carbon accounts for 6.3wt% of the anode material; and other substances account for 4.5wt% of the anode material.

### Example 8

The difference between Example 8 and Example 1 was that the silicon powder with a particle size ranging from 5 µm to 10 µm was replaced with a silicon nanosheet having a thickness ranging from 10 nm to 50 nm and a planar size ranging from 100 nm to 600 nm, and other steps were the same as those in Example 1.

It has been determined that the anode material of Example 8 comprises a silicon nanosheet, a carbon-coated tin nanowire and a carbon nanotube. A thickness of the silicon nanosheet is in a range of from 10 nm to 50 nm and a planar size of the silicon nanosheet is in a range of from 100 nm to 600nm; a diameter of the carbon-coated tin nanowire is in a range of from 20-80 nm and a length-to-diameter ratio of the carbon-coated tin nanowire is in a range of from 50:1 to 500:1; a diameter of the carbon nanotube is in a range of from 10 nm to 20nm and a length-to-diameter ratio of the carbon nanotube is in a range of from 100:1 to 200:1. When measured with percentages by weight, silicon accounts for 83.8 wt% of the anode material; tin accounts for 5.1 wt% of the anode material; carbon accounts for 6.2 wt% of the anode material; and other substances account for 4.9 wt% of the anode material.

### Example 9

The difference between Example 9 and Example 1 was that the silicon powder with a particle size ranging from 5 µm to 10 µm was replaced with a silicon nanowire having a diameter ranging from 5 nm to 200 nm and a length ranging from 50 nm to 2000 nm, and other steps were the same as those in Example 1.

It has been determined that the anode material of Example 8 comprises a silicon nanowire, a carbon-coated tin nanowire and a carbon nanotube. A diameter of the silicon nanowire is in a range of from 5 nm to 200 nm and a length of the silicon nanowire is in a range of from 50 nm to 2000 nm; a diameter of the carbon-coated tin nanowire is in a range of from 20-80 nm and a length-to-diameter ratio of the carbon-coated tin nanowire is in a range of from 50:1 to 500:1; a diameter of the carbon nanotube is in a range of from 10 nm to 20 nm and a length-to-diameter ratio of the carbon nanotube is in a range of from 100:1 to 200:1. When measured with percentages by weight, silicon accounts for 82.2 wt% of the anode material; tin accounts for 5.6wt% of the anode material; carbon accounts for 6.9 wt% of the anode material; and other substances account for 5.3wt% of the anode material.

### Comparative Example 1

The difference between Comparative Example 1 and Example 1 was that neither the carbon nanotube nor the tin nanowire was added, and other steps were the same as those in Example 1.

It has been determined that the anode material obtained in Comparative Example 1 only contains a silicon nanoparticle. And the silicon nanoparticle is coated with a carbon layer on its surface and a particle size of the silicon nanoparticle is in a range of from 50 nm to 200 nm. When measured with percentages by weight, silicon accounts for 95.3 wt% of the anode material; carbon accounts for 3.8 wt% of the anode material; and other substances account for 0.9 wt% of the anode material.

### Comparative Example 2

The difference between Comparative Example 2 and Example 1 was that the tin nanowire was not added, and other steps were the same as those in Example 1.

It has been determined that the anode material obtained in Comparative Example 2 comprises a silicon nanoparticle and a carbon nanotube. The silicon nanoparticle is coated with a carbon layer and has a particle size of the silicon nanoparticle is in a range of from 50 nm to 200 nm; a diameter of the carbon nanotube is in a range of from 10 nm to 20 nm and a length-to-diameter ratio of the carbon nanotube is in a range of from 100:1 to 200:1. When measured with percentages by weight, silicon accounts for 92.2 wt% of the anode material; carbon accounts for 6.7 wt% of the anode material; and other substances account for 1.1 wt% of the anode material.

### Comparative Example 3

The difference between Comparative Example 3 and Example 1 was that the carbon nanotube was not added, and other steps were the same as those in Example 1.

It has been determined that the anode material obtained in Comparative Example 2 comprises a silicon nanoparticle and a carbon-coated tin nanowire. The silicon nanoparticle is coated with a carbon layer and a particle size of the silicon nanoparticle is in a range of from 50 nm to 200 nm; a diameter of the carbon-coated tin nanowire is in a range of from 20-80 nm and a length-to-diameter ratio of the carbon-coated tin nanowire is in a range of from 50:1 to 500:1. When measured with percentages by weight, silicon accounts for 89.2 wt% of the anode material; tin accounts for 4.3 wt% of the anode material; carbon accounts for 5.7 wt% of the anode material; and other substances account for 0.8 wt% of the anode material.

### Comparative Example 4

The difference between Comparative Example 5 and Example 1 was that, in Step (2), a solar-grade silicon cutting waste and polyvinyl pyrrolidone (PVP) were added to the carbon nanotube solution obtained in Step (1), and homogenously dispersed in a homogenizer, then filtered, washed, and dried to obtain a uniformly dispersed composite precursor. Finally, the composite precursor was placed in a high-temperature sintering furnace and sintered in a mixed atmosphere of nitrogen and acetylene from room temperature to 700°C. After sintering, the sintered material was dispersed in a solvent, i.e., ethanol, to obtain a dispersant. Then, a tin nanowire was added to the dispersant and homogenously dispersed in a homogenizer, then filtered, washed, and dried to obtain an anode material. Other steps were the same as those in Example 1.

It has been determined that the anode material of Comparative Example 5 comprises a silicon-based material, a tin nanowire, and a carbon nanotube. The silicon-based material is an irregular silicon particle with a particle size ranging from 1µm to 10 µm and coated with a carbon layer on its surface. A diameter of the tin nanowire is in a range of from 20 nm to 80 nm and a length-to-diameter ratio of the tin nanowire is in a range of from 50:1 to 500:1; a diameter of the carbon nanotube is in a range of from 10 nm to 20 nm and a length-to-diameter ratio of the carbon nanotube is in a range of from 100:1 to 200:1. When measured with percentages by weight, silicon accounts for 87.8 wt% of the anode material; tin accounts for 4.1 wt% of the anode material; carbon accounts for 4.8 wt% of the anode material; and other substances account for 3.3 wt% of the anode material.

### Comparative Example 5

The difference between Comparative Example 5 and Example 1 was that, in Step (2), a silicon powder with a particle size ranging from 5 µm to 10 µm and polyvinyl pyrrolidone (PVP) were added to the carbon nanotube solution obtained in Step (1), and homogenously dispersed in a homogenizer, then filtered, washed, and dried to obtain a uniformly dispersed composite precursor. Finally, the composite precursor material was placed in a high-temperature sintering furnace and sintered in a mixed atmosphere of nitrogen and acetylene from room temperature to 700°C. After sintering, the sintered material was dispersed in a solvent, i.e., ethanol, to obtain a dispersant. Then, a tin nanowire was added to the dispersant and homogenously dispersed in a homogenizer, then filtered, washed, and dried to obtain an anode material. Other steps were the same as those in Example 1.

It has been determined that the anode material of Comparative Example 5 is a mixture of a silicon-based material, a tin nanowire, and a carbon nanotube. The silicon-based material is a silicon particle with a particle size ranging from 5 µm to 10 µm and coated with a carbon layer on its surface. A diameter of the tin nanowire is in a range of from 20 nm to 80 nm and a length-to-diameter ratio of the tin nanowire is in a range of from 50:1 to 500:1; a diameter of the carbon nanotube is in a range of from 10 nm to 20nm and a length-to-diameter ratio of the carbon nanotube is in a range of from 100:1 to 200:1. When measured with percentages by weight, silicon accounts for 89.3 wt% of the anode material; tin accounts for 4.1 wt% of the anode material; carbon accounts for 4.2 wt% of the anode material; and other substances account for 2.4 wt% of the anode material.

### Test results and analysis

### (1) Initial performance and cycling stability performance

The prepared half-cells were charged and discharged at a constant current, by using a LAND Battery Testing System, wherein a cut-off voltage was set to 0.005-1.0V and a charge/discharge rate (C-rate) was set to 0.2C. A first-cycle specific charge capacity, first-cycle coulombic efficiency, a 100th-cycle specific charge capacity and 100th-cycle coulombic efficiency were tested.

Capacity retention rate over 100 cycles were calculated by the following formula. Capacity retention rate over 100 cycles = 100th-cycle specific charge capacity/first-cycle specific charge capacity × 100%.

Data for first-cycle specific charge capacities, first-cycle coulombic efficiency, 100th-cycle coulombic efficiency and capacity retention rates over 100 cycles in each example and in each comparative example were shown in Table 1.

**Table 1 Initial performance and cycling stability performance of half-cells**

| | First-cycle specific charge capacity (mAh/g) | First-cycle coulombic efficiency (%) | 100^{th}-cycle coulombic efficiency (%) | Capacity retention rate over 100 cycles (%) |
|---|---|---|---|---|
| Example 1 | 2728 | 89.26 | 98.98 | 81.61 |
| Example 2 | 2673 | 90.02 | 98.48 | 78.12 |
| Example 3 | 2671 | 89.02 | 97.48 | 79.12 |
| Example 4 | 2784 | 89.13 | 99.05 | 90.85 |
| Example 5 | 2965 | 89.65 | 98.82 | 92.32 |
| Example 6 | 3022 | 90.02 | 98.98 | 95.32 |
| Example 7 | 2556 | 87.52 | 98.86 | 81.23 |
| Example 8 | 2854 | 88.68 | 98.72 | 92.36 |
| Example 9 | 2733 | 88.65 | 98.72 | 79.63 |
| Comparative Example 1 | 2932 | 88.65 | 97.32 | 42.36 |
| Comparative Example 2 | 1654.3 | 1602.0 | 96.84 | 45.32 |
| Comparative Example 3 | 2156.8 | 2053.5 | 95.21 | 46.21 |
| Comparative Example 4 | 2954.5 | 2811.8 | 95.17 | 47.36 |
| Comparative Example 5 | 1654.3 | 1602.0 | 96.84 | 48.24 |

Combining the examples and Table 1, it can be seen that the half-cells prepared with the anode materials provided in the examples of the present disclosure all have a first-cycle specific charge capacity of more than 2500 mAh/g, first-cycle coulombic efficiency of more than 87% and a capacity retention rate of more than 78% over 100 cycles, exhibiting good overall performance. However, the half-cells prepared with the anode materials provided in the comparative examples usually show poor cycling stability.

### (2) Rate performance

The prepared half-cells were charged and discharged at a constant current, by using a LAND Battery Testing System, wherein a cut-off voltage was set to 0.005-1.0V, and tests were performed at charge/discharge rates (C-rates) of 0.1C, 0.2C, 0.5C, 1C, and 0.2C, respectively.

Capacity retention rates at different C-rates were calculated by the following formula. Capacity retention rate at a certain C-rate= specific charge capacity at the certain C-rate/ specific charge capacity at a C-rate of 0.1C × 100%.

Data of the capacity retention rates at different C-rates in each example and in each comparative example were shown in Table 2.

**Table 2 Rate performance for half-cells**

| | 0.2C(%) | 0.5C(%) | 1C(%) | 0.2C(%) |
|---|---|---|---|---|
| Example 1 | 96.82 | 86.26 | 65.62 | 94.56 |
| Example 2 | 95.36 | 86.16 | 65.26 | 94.53 |
| Example 3 | 93.72 | 81.26 | 60.62 | 91.56 |
| Example 4 | 96.54 | 89.78 | 68.95 | 97.12 |
| Example 5 | 98.23 | 91.21 | 73.54 | 97.56 |
| Example 6 | 98.25 | 92.15 | 73.61 | 97.63 |
| Example 7 | 93.72 | 81.26 | 60.62 | 91.56 |
| Example 8 | 97.36 | 90.16 | 71.26 | 96.53 |
| Example 9 | 95.36 | 86.16 | 65.26 | 94.53 |
| Comparative Example 1 | 83.14 | 45.31 | 19.65 | 56.32 |
| Comparative Example 2 | 82.25 | 54.31 | 25.94 | 75.14 |
| Comparative Example 3 | 81.28 | 50.52 | 21.85 | 70.15 |
| Comparative Example 4 | 85.22 | 49.21 | 23.84 | 53.17 |
| Comparative Example 5 | 80.54 | 48.33 | 22.39 | 52.29 |

Combining the examples and Table 2, it can be seen that the half-cells prepared with the anode materials provided in the examples of the present disclosure have a capacity retention rate of more than 60% at a C-rate of 1C, while the half-cells prepared with the anode materials provided in the comparative examples have a capacity retention rate of less than 30% a C-rate of 1C.

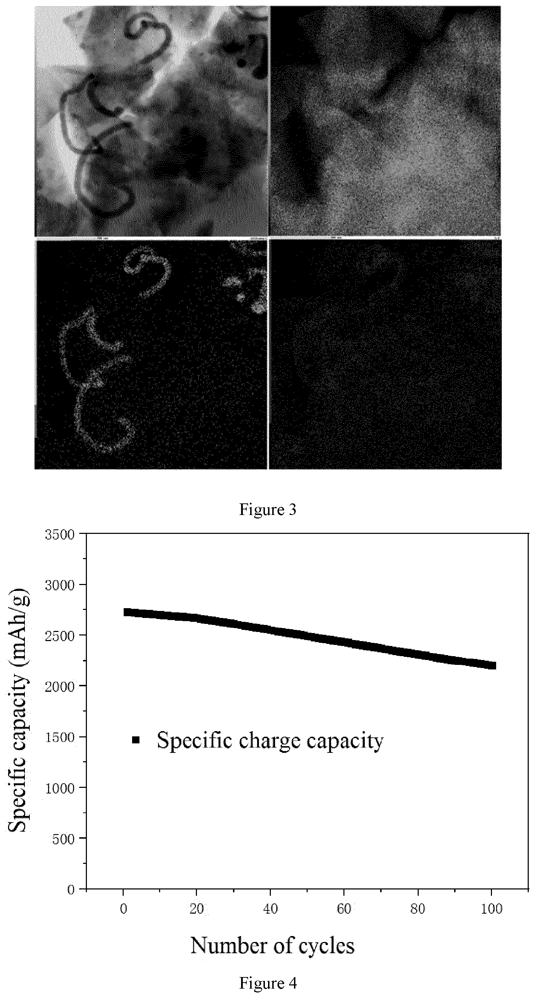

Figure 2 is a scanning electron microscope (SEM) image of an anode material provided in Example 1 of the present disclosure; and Figure 3 is a transmission electron microscope (TEM) image of the anode material provided in Example 1 of the present disclosure. It can be seen from Figures 2 and 3 that the carbon-coated tin nanowire and the carbon nanotube are both distributed on and between the surfaces of the flake-like and granular silicon. The inventors speculate that, since the carbon-coated tin nanowire and the carbon nanotube both have a certain length and good flexibility and elasticity, the carbon-coated tin nanowire can maintain an intact structure during the charging and discharging process; at the same time, the active materials in the anode material can be in contact with each other to achieve good electrical contact. In particular, tin has an excellent ionic conductivity and the carbon nanotube has an outstanding electronic conductivity, which can both greatly improve the electrical performance of the half-cell.

Figure 4 is a diagram showing electrochemical cycling of a half-cell prepared by the anode material provided in Example 1 of the present disclosure. As can be seen from Figure 4, the first-cycle specific charge capacity of the half-cell provided in Example 1 is as high as 2728 mAh/g, and the capacity retention rate over 100 cycles is 81.26%, showing excellent electrochemical performance.

The above-described embodiments are only a part of embodiments of the present disclosure, not all of them. The detailed description of the embodiments of the present disclosure is not intended to limit the protection scope of the present disclosure, but only represents some selected embodiments of the present disclosure. Based on the embodiments in the present disclosure, all other embodiments obtained by those skilled in the art, without creative work, are still within the scope of protection of the present disclosure.

### Industrial Applicability

The anode material provided in the present disclosure comprises a silicon-based material, a carbon-coated tin nanowire and a carbon nanotube. The carbon-coated tin nanowire and the carbon nanotube both have a certain length, and have flexibility and elasticity to some extent. And they are mixed with the silicon-based material to form a three-dimensional conductive network structure, which can alleviate the volume effect of the anode material during the lithiation / delithiation process. Thus the lithium-ion battery has a large specific capacity and high cycling stability. At the same time, the anode material has a remarkable ionic conductivity and an excellent electronic conductivity, thereby obtaining a better conductivity.

## Claims

1. An anode material, comprising a silicon-based material, a carbon-coated tin nanowire and a carbon nanotube.

2. The anode material according to claim 1, wherein the silicon-based material is at least one of monatomic silicon, a silicon alloy, and silicon monoxide; and/or
the monatomic silicon is at least one of a silicon nanoparticle, a silicon nanosheet, and a silicon nanowire; and/or
the silicon alloy is at least one of a silicon-aluminum alloy, a silicon-magnesium alloy, a silicon-iron alloy and a silicon-silver alloy.

3. The anode material according to claim 2, wherein a particle size of the silicon nanoparticle is in a range of from 5 nm to 200 nm; and/or
a thickness of the silicon nanosheet is in a range of from 5 nm to 100 nm and a planar size of the silicon nanosheet is in a range of from 100 nm to 2000 nm.

4. The anode material according to claim 2, wherein a diameter of the silicon nanowire is in a range of from 5 nm to 200 nm and a length of the silicon nanowire is in a range of from 50 nm to 2000 nm.

5. The anode material according to any one of claims 1-3, wherein a surface of the silicon-based material is coated with a carbon layer with a nanometer-scale thickness.

6. The anode material according to claim 5, wherein the thickness of the carbon layer coated on the silicon-based material is in a range of from 2 nm to 10 nm.

7. The anode material according to any one of claims 1-3, wherein a diameter of the carbon-coated tin nanowire is less than 100 nm and a length-to-diameter ratio of the carbon-coated tin nanowire is in a range of from 5:1 to 1000: 1; and/or
a thickness of a carbon coating of the carbon-coated tin nanowire is nanometer-scale; and/or
a graphitization degree, γ, of the carbon coating of the carbon-coated tin nanowire satisfies a relationship of 0.3 ≦ γ ≦ 1, wherein γ = (0.344-d₀₀₂)/(0.344-0.3354), and d₀₀₂ is an interlayer spacing of (002) crystal plane, expressed in nanometers, of the carbon coating.

8. The anode material according to claim 7, wherein the thickness of the carbon coating of the carbon-coated tin nanowire is in a range of from 2 nm to 10 nm.

9. The anode material according to any one of claims 1-3, wherein a diameter of the carbon nanotube is less than 20 nm and a length-to-diameter ratio of the carbon nanotube is in a range of from 10:1 to 1000: 1; and/or
the carbon nanotube comprises at least a single-walled carbon nanotube.

10. The anode material according to claim 9, wherein the carbon nanotube is a mixture of the single-walled carbon nanotube and a multi-walled carbon nanotube.

11. The anode material according to any one of claims 1-3, wherein a percent of silicon by weight in the anode material is 60%-98%, a percent of tin by weight in the anode material is 0.5%-20%, and a percent of carbon by weight in the anode material is 1.5%-20%.

12. The anode material according to any one of the claims 1-3, wherein the anode material also comprises a carbon powder.

13. The anode material according to claim 12, wherein the carbon powder is one or more of graphite, hard carbon and soft carbon.

14. An anode sheet, comprising the anode material according to any one of claims 1-13.

15. A method for preparing the anode sheet according to claim 14, comprising:
mixing the anode material with a solvent, a conductive additive and a binder to form an anode slurry;
applying the anode slurry on an anode collector, and drying to obtain the anode sheet.

16. A lithium-ion secondary battery, comprising the anode sheet according to claim 14.

17. A method for preparing the lithium-ion secondary battery according to claim 16, comprising:
combining the anode sheet with a cathode sheet and a separator to form an electrode assembly;
placing the electrode assembly in a housing, and injecting an electrolyte into the housing to obtain the lithium-ion secondary battery.

18. A solid-state lithium-ion battery, comprising the anode sheet according to claim 14.

19. A method for preparing the solid-state lithium-ion battery according to claim 18, comprising:
combining the anode sheet with a cathode sheet and a solid electrolyte to obtain the solid-state lithium-ion battery.
